# FASCICULE DE BREVET EUROPEEN

(11) **EP 4 041 531 B1**
(45) Date de publication et mention de la délivrance du brevet: **03.12.2025**
(21) Numéro de dépôt: 19741988.0
(22) Date de dépôt: 08.07.2019
(51) Int. Cl.: B29C 64/209, B29C 64/241, B29C 64/153, B29C 64/106, B29C 64/165, B33Y 30/00, B33Y 10/00, B22F 3/105, B28B 1/00, B05B 13/02

(54) **DISPOSITIF ET PROCÉDÉ POUR LA FABRICATION ADDITIVE**
VORRICHTUNG UND VERFAHREN ZUR GENERATIVEN FERTIGUNG
DEVICE AND METHOD FOR ADDITIVE MANUFACTURING

(43) Date de publication de la demande: 17.08.2022
(73) Titulaire: Ecole Centrale De Nantes, 44321 Nantes (FR)
(72) Inventeur: HASCOËT, Jean-Yves, 44300 Nantes (FR); MOGNOL, Pascal, 35000 Rennes (FR); LE NÉEL, Tugdual, 44200 Nantes (FR)
(74) Mandataire: Santarelli
(86) Numéro de dépôt international: PCT/EP2019/068309
(87) Numéro de publication internationale: WO 2020/011737

(56) Documents cités:
- WO-A2-2015/127247
- GB-A- 2 525 400
- US-A1- 2014 348 662
- BEROK KHOSHNEVIS: "Tower Construction with Contour Crafting", YOU TUBE, 4 June 2017 (2017-06-04), pages 1, XP054977619, Retrieved from the Internet <URL:https://www.youtube.com/watch?v=yVXfdJoIDgo> [retrieved on 20180803]

## Description

### Domaine technique

L'invention concerne un dispositif et un procédé pour la fabrication additive. L'invention est adaptée à de nombreuses méthodes de fabrication additive, notamment celles mettant en œuvre une projection de matière, un frittage ou une fusion sélective de matière dans un lit de matière, une projection sélective de liant sur un lit de matière.

La fabrication additive consiste à fabriquer une pièce par strates successives. Chaque strate correspond à un ajout de matière, quelle que soit la méthode, d'épaisseur et de forme déterminée, sur la strate précédente. Cet ajout de matière est réalisé au moyen d'un effecteur qui selon la méthode de fabrication additive considérée, réalise un apport direct de matière (cas de la projection), ou reconstitue de la matière solide et cohésive à partir d'un matériau non cohésif préalablement déposé. La forme de la strate est obtenue en pilotant la trajectoire relative de l'effecteur au cours de l'apport de matière

### Technique antérieure

Les déplacements d'un outil au cours d'une fabrication par enlèvement de matière et d'un effecteur au cours d'une fabrication additive sont similaires, de sorte que les moyens, machine et chaîne informatique, utilisés dans le domaine de l'usinage par enlèvement de matière sont utilisables après quelques adaptations pour la mise en œuvre d'un procédé de fabrication additive.

De fait, suivant les préjugés de l'homme du métier, la fabrication additive est mise en œuvre au moyen des mêmes machines ou de machines très similaires à celles utilisées pour l'usinage par enlèvement de matière, reproduisant des cinématiques de machines-outils, à cinématique série ou parallèle, ou utilisant des robots polyarticulés.

Ces solutions cinématiques comprennent au moins 3 axes pilotés et le plus souvent 5 ou 6 axes, ce qui rend ces machines complexes de réalisation. De plus elles ne permettent de ne déplacer qu'un effecteur à la fois, et même s'il est possible de monter plusieurs effecteurs sur la tête d'une machine-outil ou à l'extrémité du bras d'un robot, ceux-ci suivent nécessairement des trajectoires parallèles.

Ces solutions de l'art antérieur sont également limitées par leur volume de travail. Une machine-outil a un volume de travail fixe de même qu'un robot polyarticulé, et, s'il est possible d'associer plusieurs robots polyarticulés pour couvrir un volume plus important, la programmation devient complexe.

GB2525400A divulgue un robot destiné à la fabrication d'une pièce par fabrication additive, comprenant un bras rotatif.

### Exposé de l'invention

L'invention vise à résoudre ces inconvénients et concerne à cette fin un robot destiné à la fabrication d'une pièce par fabrication additive par éléments de volume ou voxels, ledit robot comprenant :
une base ; un bras rotatif comportant une pluralité d'effecteurs de fabrication additive répartis radialement sur ledit bras ; des moyens pour déplacer en translation le bras rotatif en rotation, selon une direction parallèle à son axe de rotation ; des moyens de guidage en translation et
en rotation du bras rotatif par rapport à la base ; des moyens pour piloter l'action des effecteurs de fabrication additive en fonction de la position du bras rotatif dans l'espace.

Ainsi, pour chaque effecteur du bras, la combinaison de la rotation et de la translation du bras définit en termes de trajectoire une surface balayée cylindrique. L'actionnement de l'effecteur de fabrication additive pendant un temps déterminé alors qu'il parcourt cette surface balayée, produit un volume élémentaire de matière ou voxel.

Ce principe, appliqué à l'ensemble des effecteurs de fabrication additive présents sur le bras, permet de créer une grille de voxels occupant le volume de travail du robot.

La pièce à fabriquer est un sous-ensemble de cette grille de voxels. Elle est obtenue en pilotant chacun des effecteurs au cours du déplacement hélicoïdal du bras rotatif de sorte à ne créer que les voxels correspondant à la pièce.

Ainsi, tous les effecteurs sont soumis à la même cinématique imposée par le bras rotatif, mais chaque effecteur est activé/désactivé individuellement pour construire la pièce par un assemblage de volumes élémentaires, de sorte qu'en pratique, tous les effecteurs travaillent en même temps et coopèrent pour créer le volume bien qu'ils soient tous entraînés par le même dispositif.

Ainsi, en faisant travailler en même temps tous les effecteurs, le dispositif objet de l'invention permet une productivité élevée tout en utilisant une cinématique simple et aisément programmable.

Potentiellement n'importe quelle forme est réalisable dans le volume balayé par le bras rotatif avec une résolution qui dépend de la dimension du voxel de matière réalisable par un effecteur, du pas et du nombre d'effecteurs installés sur le bras.

Le système est adaptable à la réalisation d'une pièce de petite ou de très grande dimension et dans sa version la plus simple, le robot objet de l'invention ne comprend que 2 axes, entraînables par un seul moteur, ce qui en réduit le coût de réalisation à volume de travail égal par rapport aux solutions de l'art antérieur.

L'Invention est avantageusement mise en œuvre selon les modes de réalisations et les variantes exposés ci-après, lesquels sont à considérer individuellement ou selon toute combinaison techniquement opérante.

Avantageusement, le robot objet de l'invention comprend une pluralité de bras rotatifs porteurs d'effecteurs. Cette disposition permet d'augmenter à la fois la résolution et la productivité du robot, ainsi que la répartition des différentes fonctions entre les bras.

Ainsi, selon un exemple de réalisation, adapté à la mise en œuvre d'un procédé de fabrication additive par agrégation sélective d'un matériau granulaire compris dans un lit de matière, l'un des bras rotatifs comprend un ensemble de dépose de matériau granulaire sur le lit de matière.

Avantageusement, l'ensemble de dépose comprend une trémie de dépose comprenant une pluralité d'orifices de déversement. Ce mode de réalisation de l'ensemble de dépose est particulièrement compact et adaptable au robot objet de l'invention pour une fabrication additive continue.

Avantageusement, le robot objet de l'invention comprend un racleur, sous la forme d'une lame ou d'un rouleau agissant sur le lit de matière et entraîné par un bras rotatif. Selon un mode de réalisation particulier le racleur est lié au même bras que la trémie.

Selon un mode de réalisation, le robot comprend un support de pièce comprenant des moyens de déplacement de la pièce en cours de fabrication. Ce mode de réalisation permet d'améliorer à la fois la résolution des contours et d'augmenter le volume des pièces réalisables par le robot.

Selon un mode de réalisation particulier, le robot objet de l'invention comprend des moyens pour déplacer les effecteurs le long d'un bras rotatif. Ce mode de réalisation permet d'augmenter la résolution du robot dans la fabrication de pièces.

Avantageusement, la base comprend des moyens de déplacement de l'ensemble du robot dans l'espace. Ce mode de réalisation permet à la fois d'augmenter le volume de la pièce réalisable par un robot unique, mais plus avantageusement permet de faire coopérer plusieurs robots à la demande, pour réaliser des pièces de volume très important.

L'Invention concerne également un procédé pour la fabrication additive d'une pièce mettant en œuvre un robot objet de l'invention selon l'un quelconque de ses modes de réalisation, comprenant les étapes consistant à : (i) obtenir un volume discrétisé en mailles volumiques correspondant au volume de fabrication du robot ; (ii) insérer la maquette numérique de la pièce dans le volume obtenu à l'étape i) ; (iii) déterminer les mailles volumiques comprises dans le volume de la maquette numérique et délimitant les contours de ladite maquette selon une tolérance de ressaut prédéfinie ; (iv) réaliser la pièce en associant à chaque maille déterminée à l'étape iii) une activation d'un effecteur dans la position correspondante.

Ce procédé est simple de mise en œuvre tant du point de vue de la programmation que de la commande du robot en cours de réalisation.

Dans un mode de réalisation du procédé objet de l'invention mettant en œuvre un procédé de fabrication additive par frittage ou agglomération sélectifs d'un lit de matière, l'étape iv) comprend l'activation d'un effecteur pour la réalisation des moyens de rétention dudit lit de matière.

Dans un mode avantageux de réalisation du procédé objet de l'invention, l'étape iv) comprend l'association de plusieurs robots montés sur des bases mobiles et coopérants pour agrandir le volume de fabrication, et l'étape i) comprend l'obtention du volume total de fabrication de l'ensemble de robots combinés.

### Description sommaire des dessins

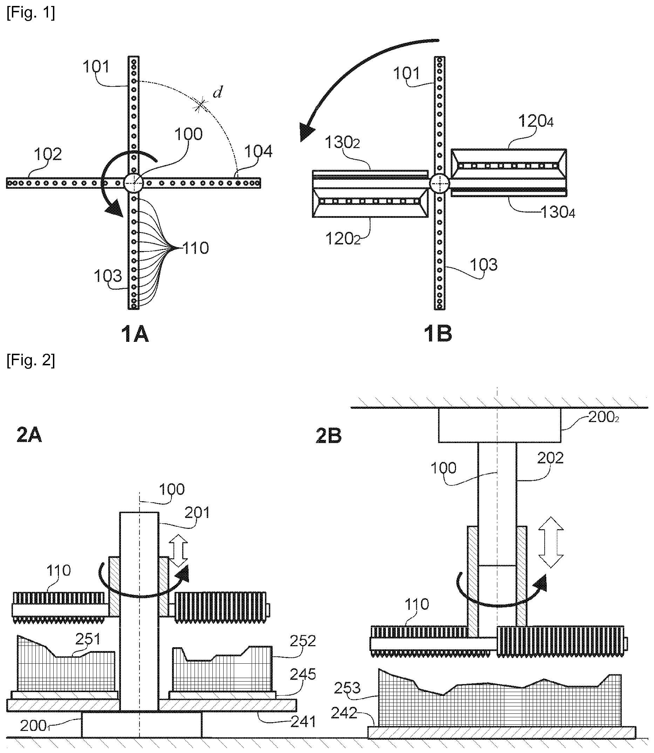

L'invention est exposée ci-après selon ses modes de réalisation préférés, nullement limitatifs, et en référence aux figures 1 à 10, dans lesquelles :
Fig. 1
   [Fig. 1] montre selon une vue de dessous des exemples de réalisation d'un robot objet de l'invention, figure 1A, comprenant le même type d'effecteur sur tous les bras, figure 1B, comprenant des effecteurs différents sur les bras ;
Fig. 2
   [Fig. 2] représente selon des vues de faces, différents modes de réalisation du robot objet de l'invention, figure 2A dans une configuration au sol, et figure 2B dans une configuration au plafond ;
Fig. 3

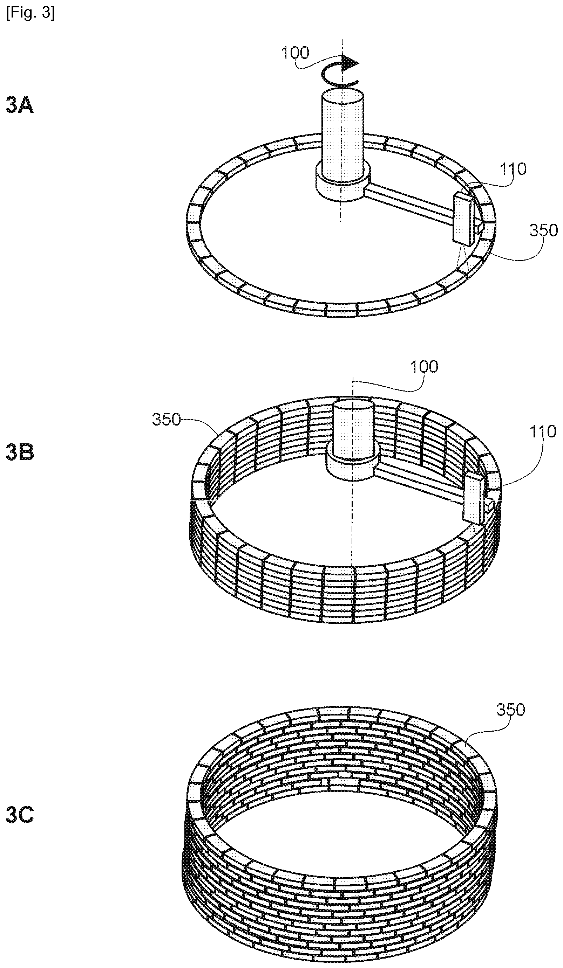

   [Fig. 3] illustre selon des vues en perspective, le principe de fabrication additive d'une pièce pour un effecteur du robot objet de l'invention, figure 3A lors d'une rotation unique du bras, figure 3B par empilement des volumes élémentaires de la figure 3A et figure 3C selon une variante du schéma d'empilement des volumes de la figure 3A ;
Fig. 4

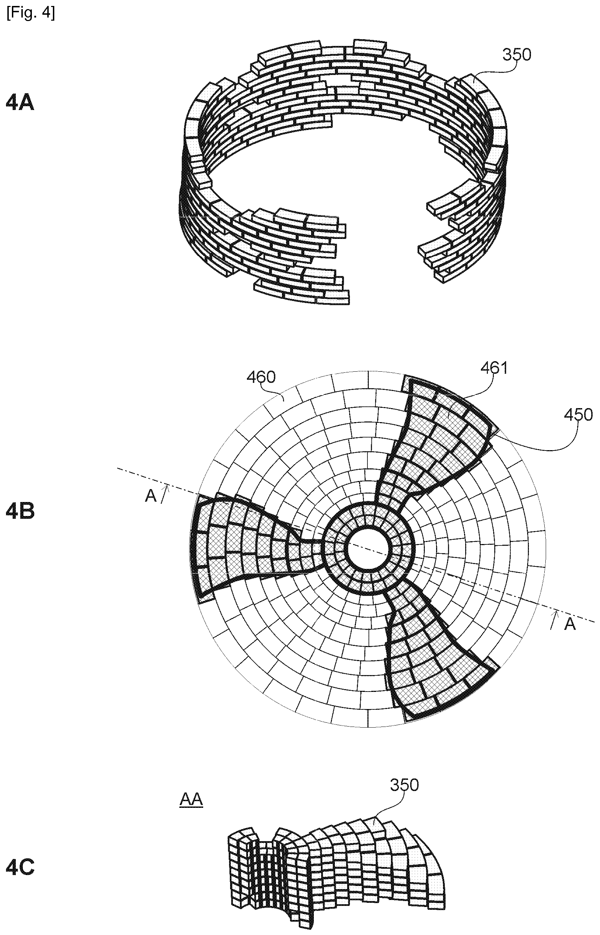

   [Fig. 4] illustre la fabrication d'une pièce selon les principes représentés figure 3, figure 4A selon une vue en perspective pour un effecteur individuel, figure 4B selon une vue de dessus, le principe de détermination des mailles de fabrication à partir de la maquette numérique de la pièce et du volume de fabrication discrétisé du robot et la figure 4C montre selon une vue en perspective et en coupe AA définie figure 4B, un exemple de réalisation de la pièce à partir de sa définition numérique figure 4B ;
Fig. 5

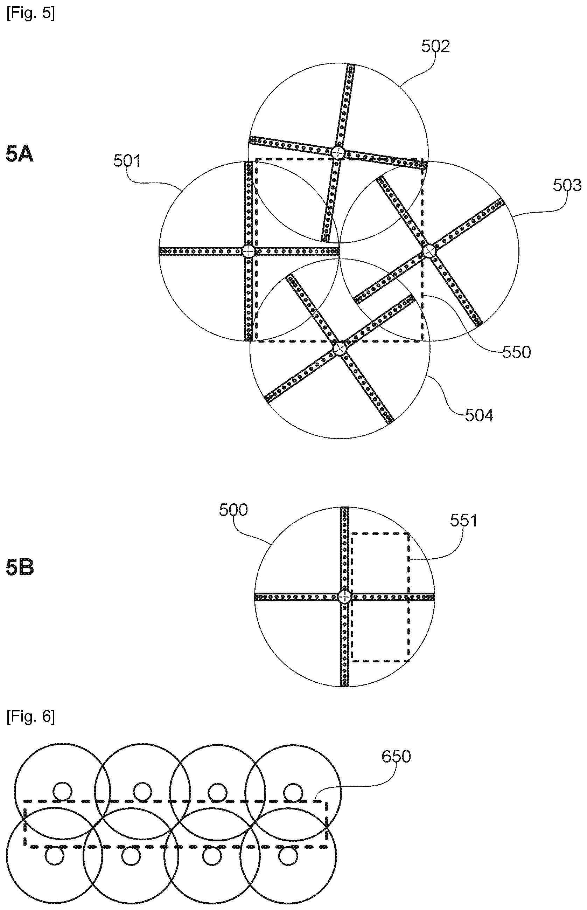

   [Fig. 5] montre selon une vue de dessus, un exemple de coopération de plusieurs robots objet de l'invention, en comparant le volume tétragonal réalisable par un robot, figure 5B, au volume tétragonal réalisable par l'association de robots ;
Fig. 6
   [Fig. 6] montre selon une vue schématique de dessus, l'association de 8 robots pour la réalisation d'une pièce ;
Fig. 7

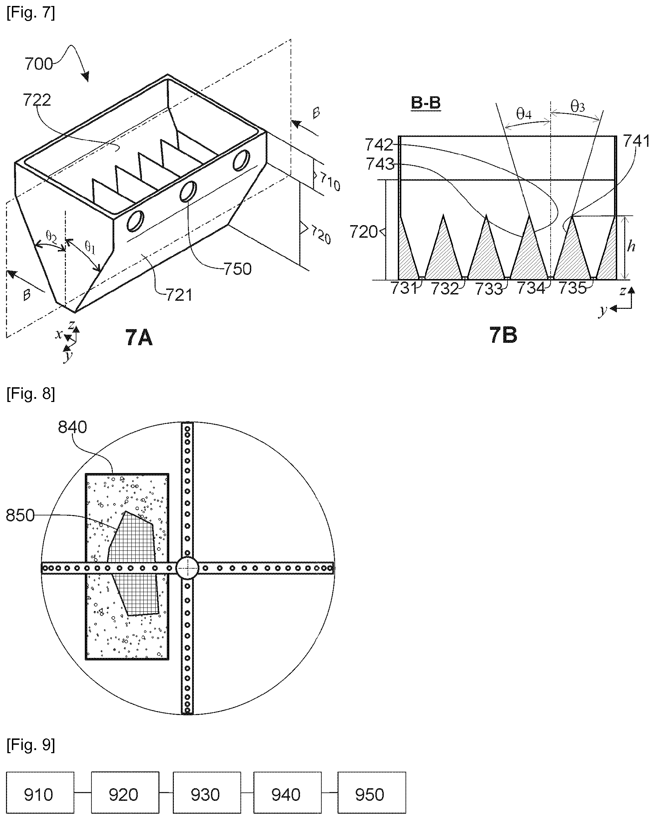

   [Fig. 7] représente, selon une vue en perspective, figure 7A, et figure 7B selon une vue en coupe AA définie figure 3A, un exemple de réalisation d'une trémie de dépose adaptable à un bras du robot objet de l'invention ;
Fig. 8
   [Fig. 8] représente en vue de dessus un exemple de mise en œuvre du robot objet de l'invention utilisant un procédé de fabrication additive par frittage ou agglomération sélective d'un lit de matière ;
Fig. 9
   [Fig. 9] représente un logigramme du procédé objet de l'invention ;
Fig. 10

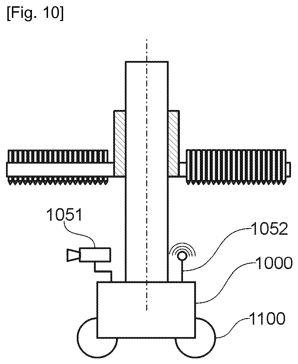

   [Fig. 10] montre schématiquement selon une vue de face un robot objet de l'invention monté sur une base mobile.

### Meilleure manière de réaliser l'invention

Figure 1, selon des exemples de réalisation schématiques, le robot objet de l'invention comprend un ou plusieurs bras (101, 102, 103, 104), de préférence 4 bras, entraînés en rotation par des moyens appropriés autour d'un axe central. (100). Chaque bras comporte un ou plusieurs effecteurs (110) de fabrication additive, répartis radialement selon un pas régulier ou non sur le bras.

Selon des exemples de réalisation, tous les bras ne comportent pas le même nombre d'effecteurs, et les effecteurs sont décalés radialement d'une distance *d*, éventuellement variable le long du bras, de sorte que l'action combinée des effecteurs couvre tout le volume de travail du robot en termes de capacité de fabrication additive.

Selon un mode de réalisation les effecteurs sont déplaçables radialement, individuellement ou en groupe, le long du bras.

À Cette fin, un effecteur ou un ensemble d'effecteurs est monté sur un chariot motorisé sur le bras. De la même manière que pour le décalage radial des effecteurs d'un bras à l'autre, cette disposition, compatible avec un tel décalage radial, permet de couvrir le volume de travail avec une résolution supérieure.

Selon des exemples de réalisation, la longueur des bras est comprise entre 5 cm et 5 m. Ainsi, dans son principe, le robot objet de l'invention est adapté à une très large gamme de pièces.

L'Invention est applicable aux procédés de fabrication additive suivants :
fusion ou frittage sur un lit de poudre,
projection de liant sur un matériau granulaire,
projection de matière.

Ainsi, le dispositif objet de l'invention est adapté à la réalisation de pièces en métal, polymère, céramique ou sable selon le procédé de fabrication additive utilisé.

Selon le procédé de fabrication additive considéré, les effecteurs sont des buses de projection d'un matériau en fusion, des buses de projection d'un liant, un laser pour la fusion d'un matériau, un dispositif de dépôt d'un matériau granulaire non aggloméré ou un racleur, sous la forme d'une lame ou d'un rouleau, pour égaliser une couche de matériau granulaire déposée.

De manière additionnelle, certains effecteurs réalisent des fonctions annexes à l'opération de fabrication additive, tel que la projection d'un gaz protecteur de la zone mise en fusion, ou d'un gaz apte à accélérer la prise du liant projeté, ou encore une fonction de chauffage local, par exemple par rayonnement infrarouge.

Ainsi, selon un exemple de réalisation, figure 1B, deux des bras sont pourvus d'une trémie (120₂, 120₄) multi-orifices de déversement d'un matériau granulaire et d'un racleur (130₂, 130₄) pour égaliser la couche de matériau déposée, et les deux autres bras (101, 103) sont pourvus d'effecteurs pour agglomérer sélectivement, par fusion ou par liant, la couche de matériau déposée.

L'Un des bras (101) agglomère sélectivement la couche de matériau déposé par l'un des ensembles trémie et racleur (120₂, 130₂) et l'autre bras (103) agglomère sélectivement la couche de matière déposée par l'autre ensemble trémie et racleur (120₄, 130₄).

Figure 2, en plus du mouvement de rotation, pour la réalisation d'une pièce (251, 252, 253), les bras sont guidés et déplacés verticalement à vitesse contrôlée parallèlement à leur axe (100) de rotation, ce que la figure 2 représente schématiquement par la présence d'un fût (201, 202) de guidage. Selon ces exemples, le fût de guidage (201, 202) et par suite d'ensemble des moyens de fabrication du robot, sont montés sur une base (200₁, 200₂).

Les figures 2A et 2B pour simplifier la représentation, la pièce (251, 252, 253) en cours de réalisation réalisée par un procédé de projection de matière. Dans le cas où la pièce est réalisée par agglomération ou frittage sélectif d'un lit de matière ladite pièce se trouve dans le lit de matière et le dispositif comprend des moyens de rétention dudit lit de matière, comme représenté figure 8.

Figure 2A, selon un premier mode de réalisation, la base (200₁) supportant le fût (201) est placée au sol, la pièce ou la pluralité de pièces (251, 252) est réalisée par fabrication additive sur une table (241) s' étendant autour du fût de guidage (201). Ce mode de réalisation est plus simple et moins coûteux en termes de fabrication du robot. En revanche, la zone centrale, occupée par le fût, limite le volume des pièces réalisables.

Figure 2B, selon un autre mode de réalisation, la base (200₂) supportant le fût (202) est placée au plafond. Dans ce mode de réalisation, il est possible de placer des effecteurs (110) proches du centre de rotation des bras, et le volume de travail ainsi que la surface fonctionnelle de la table (242) ne sont pas limités par la présence du fût (202). Les pièces réalisables (253) sont de plus grandes dimensions à volume d' encombrement égal du robot, comparativement à la solution de la figure 2A.

Le robot objet de l'invention est utilisable dans tous ses modes de réalisation pour une fabrication en 2,5D ou en 3D.

Préférentiellement, dans les deux cas, au cours de la fabrication additive, les bras tournent à vitesse constante.

En 2,5D la pièce est réalisée par plans successifs perpendiculaires à l'axe de rotation. L'Opération de fabrication additive est réalisée dans un plan, par une ou plusieurs rotations des bras à altitude constante, puis les bras sont déplacés parallèlement à l'axe de rotation d'un incrément et une nouvelle phase de fabrication additive est réalisée dans un plan parallèle au précédent, et ainsi de suite. Cette solution implique d'arrêter le processus de fabrication additive : fusion, agglomération, projection, et éventuellement dépôt d'une couche matière, entre deux incréments, même si les bras continuent de tourner.

En 3D, les mouvements rotatifs des bras et leur déplacement axial le long de leur axe de rotation sont combinés de sorte que chaque effecteur suit une trajectoire hélicoïdale, de pas variable selon un mode de réalisation particulier. Selon ce mode de mise en œuvre le processus de fabrication additive est continu et la productivité plus élevée.

De plus ce mode de réalisation permet de simplifier la réalisation du robot objet de l'invention, en n'utilisant qu'un seul moteur d'entraînement en rotation des bras, ceux-ci se déplaçant alors verticalement par l'intermédiaire d'un guidage hélicoïdal le long du fût.

Les figures 3 et 4 illustrent schématiquement le processus de fabrication d'une pièce au moyen du robot objet de l'invention. Pour la lisibilité de ces figures, le processus représenté est un processus de fabrication en 2,5D et les voxels sont représentés dans des dimensions beaucoup plus importantes en regard de la pièce réalisée qu'ils ne le sont en réalité. Le passage à une configuration de fabrication en 3D est aisé en considérant des mailles (450, 451) et des voxels (350) en portion d'hélicoïde.

Les mouvements, de même que l'activation/désactivation des effecteurs sont pilotés par un directeur de commande numérique (non représenté). Le dispositif comporte des capteurs, de sorte que la position du bras tant angulaire qu'en altitude sur son axe de rotation est connue à tout moment. Les positions des effecteurs sur le bras, tant radialement qu'en altitude sont également connues et entrées dans les tables du directeur de commande numérique, de sorte que la position dans l'espace de la matière projetée ou agglomérée par l'effecteur est également connue à tout moment du directeur de commande numérique.

Figure 3A, le bras étant entraîné en rotation autour de son axe (100), chaque effecteur (110) installé sur ledit bras suit une trajectoire circulaire (hélicoïdale dans le cas d'un processus 3D). L'Activation de l'effecteur de fabrication additive, c'est-à-dire l'activation de la projection de matière par cet effecteur, de la projection d'un liant dans le cas de l'agglomération d'un matériau granulaire, ou le déclenchement de l'émission de la source laser de l'effecteur pour la fusion ou le frittage de la matière, durant un temps/déplacement déterminé, produit un volume élémentaire de matière (350) ou voxel.

Le plus petit volume de matière réalisable, dépend, pour un procédé donné, du temps d'activation-désactivation-réactivation minimum de l'effecteur et de la vitesse de déplacement relative de l'effecteur par rapport à la pièce, cette dernière étant fonction de la vitesse angulaire du bras et de la position radiale de l'effecteur sur le bras.

Ainsi, dans cet exemple de réalisation, non limitatif, en 2,5D, chaque effecteur est apte à produire une couronne de voxels (350) au cours d'une rotation du bras.

Figure 3B, la répétition de cette opération à différentes altitudes confère à chaque effecteur (110) la capacité de réaliser un volume tubulaire cylindrique en empilant les voxels (350).

Figure 3C, selon un exemple de mise en œuvre, les voxels ne sont pas directement empilés les uns sur les autres comme le représente la figure 3A, mais sont empilés en quinconce ou selon tout autre motif d'un plan sur l'autre.

Dans tous les cas le volume de matière potentiellement agglomérée, projetée ou frittée par un effecteur se situe dans un volume tubulaire circulaire, et la position ainsi que la dimension de chaque voxel dépend des positions d'activation et de désactivation de l'effecteur.

Figure 4A, au cours du déplacement du bras, chaque effecteur est activé/ désactivé en fonction du contour à réaliser, de sorte à réaliser une portion de son volume tubulaire potentiel.

Ainsi, en associant plusieurs effecteurs de sorte que leurs volumes de fabrication tubulaires soient jointifs ou se chevauchent, le volume de fabrication est un cylindre discrétisé en volumes élémentaires.

Figure 4B, d'un point de vue numérique, ce volume de fabrication est discrétisé en mailles volumiques (460), correspondant à tous les voxels réalisables par chaque effecteur dans ce volume.

Figure 4B, selon un exemple de réalisation d'une pièce en forme d'hélice représentée en vue de dessus pour simplifier l'image, la maquette numérique volumique de la pièce (450) est placée dans ce volume discrétisé également sous forme numérique.

Par un traitement numérique approprié, les mailles (461) du volume de fabrication qui se trouvent dans ou qui définissent approximativement le volume de la maquette (450) de la pièce, en fonction d'une tolérance de ressaut définie, correspondront à des voxels réalisés lors de l'opération de fabrication additive. Cette opération numérique de sélection des mailles (461) est relativement simple de réalisation à partir d'un logiciel de conception numérique volumique.

Dans le cas de la figure 4B, le maillage a été optimisé pour tenir compte de la possibilité de décaler angulairement les voxels réalisés, d'un effecteur à l'autre et également d'un plan à l'autre. Cette opération est très facilement réalisée d'un point de vue numérique, par exemple par la rotation de chaque couronne de mailles (460) dans chaque plan d'altitude de sorte à mieux suivre le contour de la maquette numérique (450).

Figure 4C, la pièce est réalisée en empilant les voxels (350) correspondant aux mailles (461) identifiées lors du traitement numérique.

Comparativement aux techniques de l'art antérieur qui nécessitent la définition de trajectoires, le passage du traitement numérique à celui de la fabrication est également simplifié dans le cas du robot objet de l'invention.

À titre d'exemple, la réalisation de la pièce représentée figure 4 par des techniques conventionnelles, nécessite la réalisation de trajectoires selon 3 axes du point d'application/agglomération de la matière sur la pièce. La réalisation de ces trajectoires par la machine ou le robot se traduit par des combinaisons de mouvements selon les axes d'articulation ou de déplacement de la machine ou du robot, avec la nécessité au niveau de son directeur de commande numérique, de déterminer ces mouvements par une cinématique inverse en regard de la trajectoire programmée.

Physiquement, en cours de fabrication, le suivi de ces trajectoires sur les moyens de l'art antérieur se traduit par des accélérations/ décélérations permanentes sur les axes de déplacement ou d'articulation de la machine ou du robot, bien que la trajectoire du point d'application/agglomération sur la pièce soit parcourue à vitesse sensiblement constante par la combinaison cinématique de ces mouvements.

Dans le cas du dispositif objet de l'invention, dans son implémentation la plus simple, seuls deux axes de déplacement des effecteurs sont utilisés, la rotation du bras et son déplacement vertical le long de son axe de rotation, et ces deux mouvements sont réalisés à vitesses constantes, et selon un exemple de réalisation simplifiée, entraîné par un seul moteur. Il n'y a pas de programmation de trajectoire, la pièce est réalisée par activation/désactivation des effecteurs dans des positions données, correspondant directement aux mailles (461) identifiées lors du traitement numérique.

L'Activation/désactivation asservie en position des effecteurs est une fonction tout ou rien, qui ne nécessite pas de cinématique inverse pour sa réalisation. Un directeur de commande numérique moderne est potentiellement apte à piloter un nombre de ces effecteurs bien au-delà de tout ce qui est nécessaire pour la mise en œuvre du procédé de fabrication par le dispositif objet de l'invention.

L'implémentation d'effecteurs déplaçables le long du bras ou d'un pas de déplacement variable parallèlement à l'axe de rotation du bras, sont des améliorations visant essentiellement à augmenter la résolution de fabrication du dispositif objet de l'invention. Celles-ci sont facilement prises en compte au niveau numérique dans la définition du maillage permettant la programmation de la pièce, et entrent largement dans les capacités de pilotage des directeurs de commande numérique.

Contrairement à ce que pourraient laisser penser les figures 3 et 4, le dispositif objet de l'invention et sa mise en œuvre, ne sont absolument pas limités à la réalisation de pièces de révolution. Toute forme de pièce est réalisable dès lors que son volume entre dans le volume de fabrication du dispositif considéré.

Figure 10, selon un mode de réalisation, la base (1000) est pourvue de moyens de déplacement (1100). Selon cet exemple, le robot est placé sur un chariot pourvu de roues ou de chenilles pour se déplacer dans un espace défini, par exemple dans un atelier ou dans une structure en cours de fabrication telle une coque de navire, un fuselage d'aéronef ou une structure de génie civil.

Avantageusement, chaque robot monté sur son chariot comprend des moyens de positionnement (1051, 1052) allothétiques ou idiothétiques, absolus ou relatifs, à la fois dans son environnement ou relativement à un autre robot, par triangulation de balises de positionnement, traitement d'images vidéo, radar, lidar, ou de mesure sur ses moyens de motricité, seuls ou en combinaison.

Ainsi, une pluralité de tels robots, devient une pluralité de cobots aptes à s'associer en plus ou moins grand nombre en fonction du besoin. Les cobots sont ainsi aptes à intervenir selon plusieurs schémas d'association successifs, éventuellement sur des paliers à différentes hauteurs, afin de créer une structure de très grandes dimensions

La fabrication d'une pièce par l'association de plusieurs cobots de ce type est préférentiellement réalisée en 2,5D pour simplifier les évitements de collisions.

Alternativement, la base mobile est montée au plafond, par exemple suspendue sur un réseau de rails couvrant l'espace de travail visé.

Alternativement encore, la base mobile est supportée par un robot à câbles.

Figure 5, les volumes de fabrication de plusieurs robots sont combinables de sorte à obtenir un volume de fabrication total beaucoup plus important.

Ainsi, figure 5A selon un exemple de combinaison, 4 robots (501, 502, 503, 504) sont combinés de sorte que leurs volumes de travail se chevauchent. Les chevauchements sont plus ou moins importants selon la forme de la pièce à réaliser et la résolution visée. Ainsi selon cet exemple schématique non limitatif, les trajectoires des extrémités des bras de deux des robots (501, 503) sont tangentes, mais celles-ci pourraient très bien être en intersection afin de mieux couvrir la partie centrale. Il en est de même pour les deux autres robots de cet exemple (502, 504).

La position et la vitesse de rotation des bras de chaque robot sont synchronisées de sorte à éviter toute collision.

Selon, cet exemple de mise en œuvre non limitatif, les robots sont de type « placés au sol » et leur volume de travail individuel comprend une zone centrale non accessible correspondant à la position du fût de guidage.

Ainsi, figure 5B, le périmètre (551) du volume tétragonal maximum réalisable d'un seul tenant avec un tel robot (500) comprenant un fût central, est limité par la présence de ce fût central.

En revenant à la figure 5A, la combinaison de 4 robots du même type que celui représenté figure 5B, permet d'atteindre un volume tétragonal de réalisation dont le périmètre (550) est deux fois plus important, soit le volume 4 fois plus important, comparé à celui d'un robot unique.

L'Association de plusieurs robots de l'invention n'est pas limitée à des robots placés au sol et fonctionne tout aussi bien avec des robots montés au plafond.

Figue 6, potentiellement, il est ainsi possible de combiner les volumes de travail de n'importe quel nombre de cobots selon une multiplicité d'arrangements pour couvrir un volume de fabrication (650) désiré.

À cette fin, chaque cobot est avantageusement doté de capteurs de proximité, de contact, alignement et de positionnement, par exemple aptes à interagir avec des balises radios ou à ultrasons, de sorte à se positionner l'un par rapport à l'autre, et de moyens de communication filaires ou radioélectriques de sorte à créer entre eux un réseau comprenant des relations maître-esclave, pour la synchronisation de leurs actions.

La programmation des cobots ainsi associés bénéficie de tous les avantages indiqués plus haut pour la programmation individuelle d'un robot objet de l'invention.

En revenant à la figure 2, selon un mode de réalisation, la pièce (251, 252, 253) est mobile en cours de réalisation par rapport à l'axe (100) de rotation du robot. À cette fin, figure 2A, selon un exemple de réalisation adapté au cas d'un robot dont le fût (201) est placé au sol, la table (241) comprend un ou plusieurs chariots (245) déplaçables par rapport à la table par des dispositifs tels que vis à billes ou moteurs linéaires pilotés par le directeur de commande numérique de la machine.

Dans le cas, figure 2B, d'un robot dont le fût (202) est monté au plafond, la table (242) est elle-même accouplée à des moyens de déplacement pilotés.

Selon un mode de réalisation les déplacements ainsi autorisés de la table (242) ou des chariots (245) sont des déplacements linéaires dans un plan perpendiculaire à l'axe de rotation (100) des bras, par exemple selon des directions orthogonales.

Un même résultat est obtenu en utilisant une table fixe et un robot dont la base est pourvue de moyen de déplacement (figure 10).

Selon un autre mode de réalisation, compatible avec le précédent, les déplacements de la table (242) ou du chariot (245) comprennent des orientations angulaires selon un axe parallèle ou un axe perpendiculaire à l'axe de rotation des bras.

Ces modes de réalisation permettent d'accroître la résolution de réalisation du robot et d'augmenter le volume des pièces réalisables.

En revenant à la figure 1B, pour la mise en œuvre d'un procédé de fabrication additive par agglomération ou par frittage sélectifs, un des bras (102, 104) du robot est avantageusement pourvu d'une trémie (120₂, 120₄) de déversement pour déposer les couches successives soumises à l'agglomération ou au frittage.

Ce mode de réalisation est utilisable tant en fabrication 2,5D qu'en fabrication 3D.

La trémie est avantageusement une trémie à orifices multiples qui, associée à des moyens de raclage, permet le dépôt d'une couche de matière d'épaisseur uniforme dans la configuration cinématique du bras.

Figure 7, selon un exemple de réalisation la trémie (700) adaptable sur un bras du robot objet de l'invention comprend une partie supérieure (710) et une partie inférieure (720) dite de déversement comprenant deux parois inclinées (721, 722) convergeant vers les ouvertures inférieures multiples, réparties selon une direction transversale (y).

La trémie (700) comprend dans sa partie supérieure, des moyens (750) pour la fixer à un bras du robot, notamment par boulonnage.

Les deux parois (721, 722) inclinées de la partie inférieure (320) de la trémie sont inclinées symétriquement en regard d'un plan vertical transversal (*x, y*)*,* d'un angle *θ₁ = θ₂.* Ces angles (*θ₁*,*θ₂*) sont dans tous les cas inférieurs à 40° et préférentiellement inférieurs à 30°, de sorte que l'angle du cône de déversement (*θ₁+θ₂*) entre les deux parois (721, 722) transversales inclinées de la partie inférieure, est au plus égal à 80° et préférentiellement inférieur à 60°.

Figure 3B, la trémie (700) est compartimentée dans sa partie inférieure (720). Chaque compartiment correspond à un orifice (731, 732, 733, 734, 735), la trémie comprenant plusieurs orifices alignés selon la direction transversale (*y*). Chaque compartiment constitue une trémie conique de section rectangulaire évolutive dans la partie de déversement (720) de la trémie. Cette « sous-trémie » en regard de chaque orifice est délimitée selon la direction longitudinale (*x*) par les parois inclinées (721, 722) de la trémie et selon la direction transversale (*y*) par des parois de compartimentation (741, 742) inclinées par rapport à un plan vertical longitudinal (*x*, *z*) et convergeant vers un orifice.

Chaque paroi de compartimentation est inclinée d'un angle (*θ₃, θ*₄) inférieur à 40°, préférentiellement inférieur à 30°, de sorte que l'angle d'ouverture (*θ₃*+*θ*₄) entre deux parois de compartimentation débouchant sur un orifice, est au plus égal à 80° et préférentiellement inférieur à 60°. Le conduit ainsi créé entre les parois inclinées et les parois de compartimentation jusqu'à la sortie de l'orifice, ne comprend aucune surface inclinée d'un angle supérieur à 40° par rapport à la direction verticale. Ces conditions assurent un écoulement fluide du matériau granulaire contenu dans la trémie (700), sous la forme d'un écoulement de masse, vers chacun des orifices (731, 732, 733, 734, 735) de la trémie.

La géométrie des compartiments amenant le matériau vers les orifices, est telle que la section effective d'écoulement à travers un orifice est égale ou sensiblement égale à la section de l'orifice pendant la quasi-totalité du temps de vidage de la trémie.

Ces conditions permettent d'obtenir un débit de déversement quasi constant à travers chacun des orifices, ce débit étant fixé par la nature du matériau déversé, notamment sa masse volumique et sa granulométrie et la géométrie de la trémie, c'est-à-dire sans le recours à des moyens spécifiques de contrôle du débit de déversement.

Les parois de compartimentation contiguës (742, 743) de deux compartiments successifs sont connectées entre elles, dans la partie inférieure (720) de la trémie, par un raccordement vif, lesdites parois ainsi raccordées formant une dent ou un coin, avec un angle de pointe inférieur à 60°, préférentiellement inférieur à 40°, selon l'inclinaison respective des surfaces (742, 743) ainsi raccordées. Cette caractéristique assure une séparation facile des flux d'écoulement vers les orifices multiples de la trémie.

La section d'ouverture des orifices est avantageusement différente le long de la direction transversale.

Ainsi, lors de la rotation du bras, l'orifice (731) de plus petite ouverture suit une trajectoire circulaire plus poche du centre de courbure et par conséquent selon un plus petit rayon, alors que l'orifice de plus grande ouverture (735) suit une trajectoire plus éloignée du centre de courbure et de plus grand rayon.

La matière est déposée en bande en regard de chaque orifice et répartie sur la surface du lit de matière par un racleur également fixé au bras du robot (figure 1B).

Figure 8, l'utilisation du robot objet de l'invention pour la mise en œuvre d'un procédé de fabrication additive utilisant un lit de matière sélectivement agglomérée ou frittée, nécessite un bac de rétention pour contenir ledit lit de matière. Avantageusement, selon un mode de mise en œuvre du robot objet de l'invention, les moyens (840) de rétention du lit de matière sont créés dans la matière elle-même, par frittage ou agglomération en même temps et à mesure de la réalisation de la pièce (850).

Figure 9, selon un exemple de réalisation du procédé objet de l'invention celui-ci comprend deux étapes (910, 920) numériques.

Au cours d'une étape (910) de définition du volume de travail le volume de travail discrétisé en mailles volumiques, du robot ou d'une pluralité de robots associés est défini. Les mailles volumiques correspondent par exemple aux plus petits voxels réalisables par chacun des effecteurs portés le robot ou la pluralité de robots.

Au cours d'une étape de balancement (920), la maquette numérique de la pièce à réaliser est positionnée dans le volume discrétisé déterminé à l'étape précédente (910).

Au cours d'une étape de modélisation (930) les mailles volumiques élémentaires comprises dans le volume de la maquette numérique et celles dont les bords suivent le contour de ladite maquette selon une tolérance de ressaut prédéfinie sont déterminées.

Au cours d'une étape (940) de programmation chaque maille volumique déterminée lors de l'étape de modélisation (930) et correspondant soit à la pièce réalisée soit à la création d'un moyen de rétention d'un lit de matière, est traduite en position spatiale d'activation et de désactivation de chacun des effecteurs.

Selon une étape (950) la pièce est réalisée par empilement de voxels à partir du programme obtenu.

La description ci-avant et les exemples de réalisation, montrent que l'invention atteint le but visé, en particulier elle permet une productivité plus élevée et une programmation plus simple des opérations de fabrication additive comparées aux solutions cinématiques conventionnelles. La réalisation du robot est également moins coûteuse à volume de travail égal. Le robot objet de l'invention est réalisable dans une large gamme de dimensions et est adapté à la mise en œuvre de plusieurs procédés de fabrication additive. La possibilité de faire coopérer plusieurs robots permet la réalisation de pièces de très grandes dimensions, telles que des structures navales ou aéronautiques, des outillages ou des constructions de génie civil. À l'extrême inverse de l'échelle, selon la technologie de fabrication additive, la densité d'effecteurs le long d'un bras peut atteindre 25 effecteurs par millimètre et ainsi fournir une résolution de réalisation élevée sur des pièces de petites dimensions.

## Revendications

1. Robot destiné à la fabrication d'une pièce (251, 252, 253, 450) par fabrication additive par éléments de volume ou voxels (350), ledit robot comprenant : une base (200₁, 200₂, 1000) ; un bras rotatif (101, 102, 103, 104) comportant une pluralité d'effecteurs (110) de fabrication additive répartis radialement sur ledit bras de sorte que leurs volumes de fabrication tubulaires soient jointifs ou se chevauchent ; un fût central lié à la base assurant le guidage en translation et en rotation du bras rotatif par rapport à la base (200₁, 200₂) ; des moyens pour déplacer en translation le bras rotatif en rotation sur le fût central, selon une direction parallèle à son axe (100) de rotation de sorte que pour chaque effecteur du bras, la combinaison de la rotation et de la translation du bras définit en termes de trajectoire un volume tubulaire cylindrique et la combinaison des volumes tubulaire de chaque effecteur définit le volume de fabrication du robot ; des moyens pour piloter l' action des effecteurs (110) de fabrication additive en fonction de la position du bras rotatif dans l'espace en activant et désactivant l'effecteur pendant temps déterminé alors qu'il parcourt son volume tubulaire, de sorte à créer un voxel (350), la position ainsi que la dimension dudit voxel étant déterminée par la position d'activation et de désactivation de l'effecteur.

2. Robot selon la revendication 1, comprenant une pluralité de bras rotatifs (101, 102, 103, 104) porteurs d'effecteurs (110).

3. Robot selon la revendication 2, adapté à la mise en œuvre d'un procédé de fabrication additive par agrégation sélective d'un matériau granulaire compris dans un lit de matière, dans lequel l'un des bras rotatifs (102, 104) comprend un ensemble de dépose (120₂, 120₄, 130₂, 130₄) de matériau granulaire sur le lit de matière.

4. Robot selon la revendication 3, dans lequel l'ensemble de dépose comprend une trémie de dépose (120₂, 120₄, 700) comprenant une pluralité d'orifices (731.. 735) de déversement.

5. Robot selon la revendication 4, comprenant un racleur (130₂, 130₄) agissant sur le lit de matière, entraîné par un bras rotatif.

6. Robot selon la revendication 1, comprenant un support de pièce (241, 242) comprenant des moyens de déplacement de la pièce en cours de fabrication

7. Robot selon la revendication 1, comprenant des moyens pour déplacer les effecteurs le long d'un gras rotatif.

8. Robot selon la revendication 1, dans lequel la base (1000) comprend des moyens (1100) de déplacement du robot dans l'espace.

9. Procédé pour la fabrication additive d'une pièce mettant en œuvre un robot selon la revendication 1, comprenant les étapes consistant à : (i) obtenir (910) un volume discrétisé en mailles (460) volumiques correspondants au volume de fabrication du robot ; (ii) insérer (920) la maquette numérique (450) de la pièce dans le volume obtenu à l'étape i) ; (iii) déterminer (930) les mailles volumiques (461) comprises dans le volume de la maquette numérique et délimitant les contours de ladite maquette selon une tolérance de ressaut prédéfinie ; (iv) réaliser (950) la pièce en associant (940) à chaque maille (451) déterminée à l'étape iii) une activation et une désactivation d'un effecteur dans la position correspondante de sorte à créer la maille volumique le bras tournant à vitesse constante autour de son axe de rotation.

10. Procédé selon la revendication 9, mettant en œuvre un procédé de fabrication additive par frittage ou agglomération sélectifs d'un lit de matière, dans lequel l'étape iv) comprend l'activation d'un effecteur pour la réalisation des moyens de rétention (840) dudit lit de matière.

11. Procédé selon la revendication 9, mettant en œuvre des robots selon la revendication 8, dans lequel l'étape iv) comprend l'association de plusieurs robots (501, 502, 503, 504) coopérants pour agrandir le volume de fabrication (550), et que l'étape i) comprend l'obtention du volume total de fabrication de l'ensemble de robots combinés.

## Patentansprüche

1. Roboter, der zur Fertigung eines Werkstücks (251, 252, 253, 450) durch additive Fertigung durch Volumenelemente oder Voxel (350) bestimmt ist, wobei der Roboter umfasst: eine Basis (2001, 200₂, 1000); einen Dreharm (101, 102, 103, 104), der eine Vielzahl von Effektoren (110) für additive Fertigung beinhaltet, die radial über den Arm verteilt sind, sodass ihre rohrförmigen Fertigungsvolumina zusammenhängen oder sich überlappen; einen mit der Basis verbundenen zentralen Schaft, der für die Vorschub- und Drehführung des Dreharms in Bezug auf die Basis (200₁, 200₂) sorgt; Mittel zur Vorschubbewegung des Dreharms in Drehung auf dem zentralen Schaft in einer Richtung parallel zu seiner Drehachse (100), sodass für jeden Effektor des Arms die Kombination der Drehung und des Vorschubs des Arms hinsichtlich einer Bewegungsbahn ein zylindrisches Rohrvolumen definiert und die Kombination der Rohrvolumina jedes Effektors das Fertigungsvolumen des Roboters definiert; Mittel zum Steuern der Aktion der Effektoren (110) für additive Fertigung in Abhängigkeit von der Position des Dreharms im Raum durch Aktivieren und Deaktivieren des Effektors eine bestimmte Zeit lang, während er sein Rohrvolumen durchläuft, sodass ein Voxel (350) erzeugt wird, wobei die Position sowie die Größe des Voxels durch die Aktivierungs- und Deaktivierungsposition des Effektors bestimmt werden.

2. Roboter nach Anspruch 1, der eine Vielzahl von die Effektoren (110) tragenden Dreharmen (101, 102, 103, 104) umfasst.

3. Roboter nach Anspruch 2, der zur Umsetzung eines Verfahrens zur additiven Fertigung durch selektive Aggregation eines in einem Materialbett umfassten körnigen Materials, wobei einer der Dreharme (102, 104) eine Abscheideeinheit (120₂, 120₄, 130₂, 130₄) für körniges Material auf dem Materialbett umfasst.

4. Roboter nach Anspruch 3, wobei die Abscheideeinheit einen Abscheidetrichter (120₂, 120₄ ,700) umfasst, der eine Vielzahl von Austragsöffnungen (731.. 735) umfasst.

5. Roboter nach Anspruch 4, der einen auf das Materialbett wirkenden Abstreifer (130₂, 130₄) umfasst, der von einem Dreharm angetrieben wird.

6. Roboter nach Anspruch 1, der einen Werkstückträger (241, 242) umfasst, der Mittel zum Bewegen des in Fertigung befindlichen Werkstücks umfasst

7. Roboter nach Anspruch 1, der Mittel zum Bewegen der Effektoren entlang eines Dreharms umfasst.

8. Roboter nach Anspruch 1, wobei die Basis (1000) Mittel (1100) zum Bewegen des Roboters im Raum umfasst.

9. Verfahren zur additiven Fertigung eines Werkstücks, das einen Roboter nach Anspruch 1 einsetzt, das die Schritte umfasst bestehend aus: (i) Erhalten (910) eines diskreten Volumens an dem Fertigungsvolumen des Roboters entsprechenden Volumenmaschen (460); (ii) Einfügen (920) des digitalen Modells (450) des Werkstücks in das in Schritt i) erhaltene Volumen; (iii) Bestimmen (930) der Volumenmaschen (461), die im Volumen des digitalen Modells umfasst sind und die Konturen des Modells nach einer vordefinierten Sprungtoleranz begrenzen; (iv) Herstellen (950) des Werkstücks, durch Zuordnen (940) zu jeder in Schritt iii) bestimmten Masche (451) einer Aktivierung und Deaktivierung eines Effektors in der entsprechenden Position, um die Volumenmasche zu erzeugen, wobei sich der Arm mit konstanter Geschwindigkeit um seine Drehachse dreht.

10. Verfahren nach Anspruch 9, das ein Verfahren zur additiven Fertigung durch selektives Sintern oder Agglomerieren eines Materialbetts umsetzt, wobei Schritt iv) die Aktivierung eines Effektors zur Herstellung der Rückhaltemittel (840) des Materialbetts umfasst.

11. Verfahren nach Anspruch 9, das Roboter nach Anspruch 8 einsetzt, wobei Schritt iv) die Zuordnung mehrerer zusammenwirkender Roboter (501, 502, 503, 504) umfasst, um das Fertigungsvolumen (550) zu vergrößern, und Schritt i) den Erhalt des Gesamtfertigungsvolumens der Einheit an kombinierten Robotern umfasst.

## Claims

1. A robot intended to manufacture a part (251, 252, 253, 450) by additive manufacturing using volume elements or voxels (350), said robot comprising: a base (2001, 200₂, 1000); a rotary arm (101, 102, 103, 104) comprising a plurality of effectors (110) for additive manufacturing radially distributed on said arm such that their tubular manufacturing volumes are joined or overlap; a central shaft connected to the base for translationally and rotationally guiding the rotary arm relative to the base (200₁, 200₂); means for translationally moving the rotating arm by rotation on the central shaft, in a direction parallel to its axis (100) of rotation such that for each effector of the arm, the combination of the rotation and the translation of the arm defines, in terms of trajectory, a cylindrical tubular volume and the combination of the tubular volumes of each effector defines the manufacturing volume of the robot; means for controlling the action of the effectors (110) for additive manufacturing according to the position of the rotary arm in space by activating and deactivating the effector for a determined time while it crosses its tubular volume, so as to create a voxel (350), the position and also the dimension of said voxel being determined by the activation and deactivation position of the effector.

2. The robot according to claim 1, comprising a plurality of rotary arms (101, 102, 103, 104) bearing effectors (110).

3. The robot according to claim 2, adapted for implementing an additive manufacturing method by selective aggregation of a granular material comprised in a material bed, wherein one of the rotary arms (102, 104) comprises a deposition assembly (120₂, 120₄, 130₂, 130₄) of the granular material on the material bed.

4. The robot according to claim 3, wherein the deposition assembly comprises a deposition hopper (120₂, 120₄ ,700) comprising a plurality of discharge orifices (731.. 735).

5. The robot according to claim 4, comprising a scraper (130₂, 130₄) acting on the material bed, actuated by a rotary arm.

6. The robot according to claim 1, comprising a part support (241, 242) comprising means for moving the part being manufactured

7. The robot according to claim 1, comprising means for moving the effectors along a rotary arm.

8. The robot according to claim 1, wherein the base (1000) comprises means (1100) for moving the robot in space.

9. A method for additive manufacturing of a part implementing a robot according to claim 1, comprising steps of: (i) obtaining (910) a volume discretised into volumetric meshes (460) corresponding to the manufacturing volume of the robot; (ii) inserting (920) the digital model (450) of the part into the volume obtained in step i); (iii) determining (930) the volumetric meshes (461) comprised in the volume of the digital model and delimiting the contours of said model according to a predefined projection tolerance; (iv) producing (950) the part by associating (940) with each mesh (451) determined in step iii) an activation and deactivation of an effector in the corresponding position so as to create the volumetric mesh, the arm rotating at a constant speed about its axis of rotation.

10. The method according to claim 9, implementing an additive manufacturing method by selective sintering or agglomeration of a material bed, wherein step iv) comprises activating an effector for producing the retention means (840) of said material bed.

11. The method according to claim 9, implementing robots according to claim 8, wherein step iv) comprises associating several cooperating robots (501, 502, 503, 504) to increase the manufacturing volume (550), and step i) comprises obtaining the total manufacturing volume of all combined robots.
